(19) **Europäisches Patentamt / European Patent Office / Office européen des brevets**

(11) **EP 4 116 857 A1**

(12) **EUROPEAN PATENT APPLICATION**
published in accordance with Art. 153(4) EPC

(43) Date of publication:
**11.01.2023 Bulletin 2023/02**

(51) International Patent Classification (IPC):
*G06F 30/23* (2020.01)     *G06F 119/10* (2020.01)

(21) Application number: **22732381.3**

(86) International application number:
**PCT/CN2022/091600**

(22) Date of filing: **09.05.2022**

(87) International publication number:
**WO 2022/237708 (17.11.2022 Gazette 2022/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.05.2021   CN 202110508682**

(71) Applicant: **State Grid Hubei Electric Power Research Institute**
**Wuhan, Hubei 430077 (CN)**

(72) Inventors:
• **CAI, Xuan**
  **Wuhan, Hubei 430077 (CN)**
• **QU, Zihan**
  **Wuhan, Hubei 430077 (CN)**
• **LI, Xiaoping**
  **Wuhan, Hubei 430077 (CN)**
• **ZHAN, Xuelei**
  **Wuhan, Hubei 430077 (CN)**

(74) Representative: **Michalski Hüttermann & Partner Patentanwälte mbB**
**Kaistraße 16A**
**40221 Düsseldorf (DE)**

(54) **SOUND WAVE INTERFERENCE CORRECTION METHOD AND SYSTEM FOR AUDIBLE NOISE PREDICTION OF TRANSFORMER SUBSTATION**

(57)     The present disclosure provides a sound wave interface correction method and system for predicting audible noise of a substation. The sound wave interference correction method includes the following steps: a. obtaining sound source parameters of a main device in a substation, as well as spatial geometric dimensions of devices and buildings in the substation, and constructing a three-dimensional (3D) simulation model of the substation for sound field calculation; b. setting a corresponding sound environment parameter and boundary condition, and performing simulation to calculate boundary noise that is of the substation and does not consider an interference factor; c. calculating a radiated sound field of each device in the substation; d. obtaining a relative phase difference between individual devices and interference voiceprints of corresponding individual devices by using an interval random model perturbation method; and e. performing, by using the interference voiceprints obtained in step d, interference correction on the obtained boundary noise that is of the substation and does not consider the interference factor in step b, to obtain boundary noise of the substation. The present disclosure is helpful to guide prediction and calculation of the boundary noise of the substation and to perform treatment to make the boundary noise reach a standard, and provides algorithmic support for formulating a scheme to technically reduce noise.

FIG. 1

**Description**

**TECHNICAL FIELD**

The present disclosure relates to the field of audible noise prediction of a substation, and specifically, to a sound wave interference correction method and system for predicting audible noise of a substation.

**BACKGROUND**

Ambient noise in a substation is mainly calculated based on a general engineering algorithm specified in the standard ISO 9613-2 and simulation software developed based on the general engineering algorithm, such as Sound-PLAN. When predicting radiated noise of a strong interference sound source, the above software does not take into account a low-frequency harmonic characteristic of a coherent sound source or a sound wave interference phenomenon. A prediction error based on the above software is generally about 5 dB, and is even more than 10 dB for a plurality of boundaries, which makes it difficult for a design department to provide a treatment scheme.

At present, sound field calculation methods that can consider an interference phenomenon include a boundary element method represented in LMS Virtual Lab software, and a conical beam method and a triangular beam method represented in Raynoise software. However, in the case of large-scale sound field calculation such as substation noise prediction, the above software cannot achieve fast prediction and reliable calculation precision.

In the substation noise prediction, current achievements mostly focus on simulation-based calculation and actual measurement of radiation characteristics of individual sound sources of a transformer, a reactor, and a capacitor. For example, Zhou Bing, Wang Yuxing, et al. used a vibration-boundary element method to calculate radiated sound power of a high-voltage reactor; Zhang Ming et al. analyzed a characteristic and a distribution rule of substation noise through experimental measurement; and Lin Lida et al. designed a test method for sound power of the capacitor by using a measurement method that is based on a two-sphere method and in which a measurement point rotates around an axis perpendicular to a radius of the ground.

Noise prediction at a boundary of the substation is essentially to calculate a sound field in an outdoor sound environment. In the specific sound environment, the transformer, the reactor, the capacitor, and other power equipment are main sound sources. A ground surface condition and other buildings of the substation absorb, reflect, and refract a sound wave when the sound wave is propagated. Final sound pressure at a sensitive point at the boundary can be regarded as energy obtained by superposing, at the sensitive point, energy that is of a sound wave generated by each sound source and obtained after the sound wave is propagated and attenuated. It is bound to consider an interference effect of the sound source.

**SUMMARY**

The present disclosure provides a sound wave interference correction method and system for predicting audible noise of a substation, to improve prediction precision of boundary noise of a substation.

The following technical solutions are adopted in the present disclosure.

A sound wave interference correction method for predicting audible noise of a substation includes the following steps:

a. obtaining sound source parameters of a main device in a substation, as well as spatial geometric dimensions of devices and buildings in the substation, and constructing a three-dimensional (3D) simulation model of the substation for sound field calculation;

b. taking, as a source intensity parameter, sound power in the sound source parameters of the main device in the substation that are obtained in step a, setting a corresponding sound environment parameter and boundary condition, and performing simulation to calculate boundary noise that is of the substation and does not consider an interference factor;

c. calculating a radiated sound field of each device in the substation based on surface vibration or near-field sound pressure of the main device in the sound source parameters of the main device in the substation that are obtained in step a;

d. obtaining a relative phase difference between individual devices and interference voiceprints of corresponding individual devices by using an interval random model perturbation method based on the radiated sound field of each device in the substation in step c; and

e. performing, by using the interference voiceprints obtained in step d, interference correction on the obtained boundary noise that is of the substation and does not consider the interference factor in step b, to obtain boundary noise of the substation.

Step a includes: obtaining surface vibration or near-field sound pressure data of devices in a safe region through actual measurement, and performing vibration parameter inversion to obtain sound source parameters of devices outside the safe region, where the vibration and sound pressure data in the safe region is surface vibration data and near-field sound pressure data that are of transformers and reactors and obtained within a safe test range below 2/3 of a height of the main device in the substation.

The performing vibration parameter inversion to obtain sound source parameters of devices outside the safe region in step a is specifically predicting, based on the surface vibration or near-field sound pressure data of the devices in the safe region, surface vibration or near-field sound pressure data that cannot be measured and is of the devices outside the safe region, which specifically includes:

calculating a modal vector $\Phi_n(x)$ of a complex surface by using a finite element method based on a device drawing or a measured structure size, to obtain a modal mobility $Y_n(\omega)$, where $n = 1,2,...,N$, and a power spectral density (PSD) spectrum of a vibration displacement and a relative phase at a point $M$ are obtained through on-site surface vibration measurement of a device:

$$[\mathbf{W}]_{M \times 1} = [W(x_1), W(x_2), ..., W(x_M)]^T$$

where $W_i$ represents a value of a vibration displacement at a point $i$;
solving a modal force vector $f(x)$, where
modal force of the device in the substation is expanded as follows:

$$f(x) = \sum_{n=1}^{N} f_n \Phi_n(x)$$

$$f_n = \frac{1}{\Lambda_n} \int_0^L f(x) \Phi_n(x) dx$$

where $\Phi_n(x)$ represents a vibration modal function, and $f_n = \frac{1}{\Lambda_n} \int_0^L f(x) \Phi_n(x) dx$ represents $n^{th}$ modal force;
a modal displacement is expanded as follows:

$$W(x) = \sum_{n=1}^{N} \hat{W}_n \Phi_n(x)$$

vibration displacements at top bushings and outside side safe ranges of a main transformer and a high-voltage reactor are expressed as follows:

$$\begin{bmatrix} \tilde{W}(x_1) \\ \tilde{W}(x_2) \\ . \\ . \\ \tilde{W}(x_M) \end{bmatrix} = \begin{bmatrix} \Phi_1(x_1) & \Phi_2(x_1) & . & . & \Phi_N(x_1) \\ & & & & \\ & & & & \\ & & & & \\ \Phi_1(x_M) & . & . & . & \Phi_N(x_M) \end{bmatrix} \begin{bmatrix} \hat{W}_1 \\ \hat{W}_2 \\ . \\ . \\ \hat{W}_N \end{bmatrix}$$

reconstruction precision of the modal displacement depends on a characteristic matrix and accuracy of a measured vibration displacement of a known point, and is solved by using a direct method:

$$[\hat{\mathbf{W}}]_{N\times 1} = \{[\mathbf{\Phi}]^T_{M\times N}[\mathbf{\Phi}]_{M\times N}\}^{-1}[\mathbf{\Phi}]^T_{M\times N}[\mathbf{W}]_{M\times 1};$$

and

the modal force exciting vibration of the device is obtained through $f_n = \dfrac{\hat{W}_n}{Y_n}$ ; and
calculating, by using a structure finite element method, a distribution of vibration that is of the main device in the substation and excited by the modal force, and using an ABAQUS program to add the modal force to a fluid-solid coupling model of the transformers and the reactors, to calculate a vibration velocity on a surface of a shell.

The performing vibration parameter inversion to obtain sound source parameters of devices outside the safe region in step a further includes obtaining a parameter of an equivalent sound source of a capacitor, where the parameter of the equivalent sound source of the capacitor is inverted by performing groupization by using a genetic algorithm as an evolutionary algorithm and measuring physical observable sound pressure data on site, so as to minimize an objective function describing a difference between a calculated value and an observed value of an observable physical quantity, which specifically includes:

regarding capacitors on each floor of a capacitor tower as a combination of $n_2$ (columns) $\times$ $n_1$ (rows) equivalent sound sources with equal source intensity and a same phase, where total sound pressure p is obtained according to the following formula:

$$p = \sum_{i=1}^{n_1\times n_2} \frac{A}{r_i} e^{j(\omega t - kr_i)}$$

where in the above formula, $A$ represents a sound pressure amplitude at 1 m away from each equivalent sound source; $r_i$ represents a distance between a sound receiving point of an $i^{th}$ point sound source and the sound source, in units of m; $\omega$ represents a fillet frequency, in units of rad/s; $t$ represents time, in units of s; and $k$ represents a quantity of sound waves, in units of $m^{-1}$;
a phase of each equivalent sound source is expressed as follows:

$$r_i = r_1 + (i_1 - 1)l_1 \sin\theta + (i_2 - 1)l_2 \cos\theta$$

where $1 \le i_1 \le n_1$, and $1 \le i_2 \le n_2$; and
total sound pressure of the equivalent sound source may be expressed as follows:

$$p = \frac{A}{r} e^{j(\omega t - kr_1)} \sum_{i_2=1}^{n_2} \sum_{i_1=1}^{n_1} e^{-j2k(i_1-1)\Delta_1} e^{-j2k(i_2-1)\Delta_2}$$

where $\Delta_1 = \dfrac{l_1}{2}\sin\theta$ , and $\Delta_2 = \dfrac{l_2}{2}\cos\theta$ ; and
when using the genetic algorithm to obtain the phase of the equivalent sound source, constructing the objective function as a difference $f(\Phi)$ between measured 2D sound radiation directivity and sound directivity calculated based on the total sound pressure, where search space ($[Q_l, Q_r]$) of the genetic algorithm is given after initial data is obtained, and $N_p$ populations are randomly generated in the space; and calculating an objective function value of each point sound source, and selecting an individual with greatest fitness as a global optimal individual, namely, the parameter of the equivalent sound source of the capacitor.

The 3D simulation model of the substation in step a is a terrain file in a DXF format and a CAD model in an STP format, and the two models are respectively used by Soundplan software to calculate a sound field without an interference effect in step b and used by LMS Virtual lab software to calculate an interference sound field in step c; simulation software used in step b is noise simulation software based on Soundplan; a sound field of an individual device is calculated by the LMS Virtual lab software in step c, and when the sound field of the individual device is calculated, a known boundary is taken from the surface vibration or near-field sound pressure data of the main device in step a; and a digifax of the substation is taken from the CAD model in step a.

The relative phase difference between the individual devices in step d is a phase difference between different individual devices, and a phase relationship of a same individual device is determined and has been obtained in step a.

Specific implementation steps of the interval random model perturbation method in step d are as follows:

taking a load fluctuation and an equivalent position error of an equivalent sound source as interval variables based on the radiated sound field of each device in the substation;

calculating change ranges of an expectation and a standard deviation of a phase of the equivalent sound source by using the interval random model perturbation method; and taking, as a reference solution, actual phase data measured at an observation point of a radiated sound field of the main device in the substation on site, to verify and evaluate a calculation result of the interval random model perturbation method; and

adjusting, based on a reference solution of phase data of an individual sound source, a sound pressure distribution of each sound source when the sound source runs separately, to obtain the interference voiceprints of the corresponding individual devices.

Interference correction in step e is performed according to the following steps:

normalizing an interference voiceprint of each device after phase adjustment;

weighting and summing normalized interference voiceprints of the individual devices to obtain a sound pressure distribution mode considering an interference effect; and

converting the boundary noise that is of the substation and does not consider the interference factor into sound wave energy, and subtracting the sound pressure distribution mode considering the interference effect from the sound wave energy to obtain a comprehensively corrected noise distribution of the substation and comprehensively corrected noise of a sensitive point at a boundary to complete correction of the boundary noise of the substation.

A sound wave interference correction system for predicting audible noise of a substation includes a module for obtaining sound source parameters of a main device in a substation, a module for obtaining spatial geometric dimensions of devices and buildings in the substation, a module for constructing a 3D simulation model of the substation, a module for calculating boundary noise that is of the substation and does not consider an interference factor, a radiated-sound field calculation module, an interference voiceprint obtaining module, and a module for generating boundary noise of the substation, where

the module for obtaining the sound source parameters of the main device in the substation performs vibration parameter inversion on devices of another region based on measured vibration and sound pressure data in a safe region, to obtain surface vibration or near-field sound pressure data of the devices outside the safe region;

the module for obtaining the spatial geometric dimensions of the devices and the buildings in the substation is configured to obtain the spatial geometric dimensions of the devices and the buildings in the substation;

the module for constructing the 3D simulation model of the substation constructs the 3D simulation model of the substation based on the spatial geometric dimensions that are of the device and the building in the substation and obtained by the module for obtaining the spatial geometric dimensions of the devices and the buildings in the substation;

the module for calculating the boundary noise that is of the substation and does not consider the interference factor takes, as a source intensity parameter, sound power that is of the main device in the substation and obtained by the module for obtaining the sound source parameters of the main device in the substation, sets a corresponding sound environment parameter and boundary condition, and performs simulation to calculate the boundary noise that is of the substation and does not consider the interference factor;

the radiated-sound field calculation module is configured to separately calculate a radiated sound field of each device in the substation by using, as a known condition, surface vibration or near-field sound pressure that is of the main device and obtained by the module for obtaining the sound source parameters of the main device in the substation;

the interference voiceprint obtaining module obtains a relative phase difference between individual devices and interference voiceprints of corresponding individual devices by using an interval random model perturbation method;

and

the module for generating the boundary noise of the substation performs, by using the interference voiceprints obtained by the interference voiceprint obtaining module, interference correction on a noise distribution that is of the substation and obtained according to a downwind sound pressure level calculation method in ISO 9613-2 by the module for calculating the boundary noise that is of the substation and does not consider the interference factor, so as to obtain the final boundary noise of the substation.

The sound wave interference correction system further includes an apparatus for measuring the vibration and sound pressure data in the safe region.

Compared with the prior art, the present disclosure has the following beneficial effects: By considering an interference effect of radiated noise of the device in the substation, the noise distribution that is of the substation and calculated according to the downwind sound pressure level calculation method in ISO 9613-2 is corrected to improve prediction precision of the boundary noise of the substation. This method can measure a few sample measurement points in a safe range on a surface or within a near field of a main sound source device, invert sound source parameters of an unmeasurable device region, and realize a best equivalent model of a sound source on a premise of ensuring test safety.

## BRIEF DESCRIPTION OF THE DRAWINGS

FIG. 1 is a flowchart of a method according to the present disclosure;
FIG. 2 shows a correction effect when an interference effect is considered;
FIG. 3 shows a result of a sound field of a whole substation region when no interference effect is considered; and
FIG. 4 is a block diagram of a system according to the present disclosure.

## DETAILED DESCRIPTION

The technical solutions of the embodiments of the present disclosure are clearly and completely described below with reference to the accompanying drawings in the embodiments of the present disclosure. Apparently, the described embodiments are merely a part rather than all of the embodiments of the present disclosure. All other embodiments obtained by those of ordinary skill in the art based on the embodiments of the present disclosure without creative efforts shall fall within the protection scope of the present disclosure.

A sound wave will be shielded by a firewall, a fence at a boundary of a substation, and a building in the substation when being propagated in the substation, resulting in acoustic phenomena such as reflection, transmission, and refraction. Generally, a sound wave radiated by a noise source may reach a receiving point through air propagation of the sound source, after being reflected by the ground, and/or through reflection and diffraction by buildings, fences, sound insulation screens, and the like. The present disclosure proposes to establish a sound propagation model of a sound field in the substation by measuring an acoustic reference substance in the substation. In this method, lengths, widths, heights, and relative positions of buildings, functional structures, fences, and firewalls in the substation need to be measured to ensure accuracy of a calculation model. After the measurement, modeling is performed on the substation. A 3D solid model, a finite element model, and a boundary element calculation model need to be established. When the finite element model is established, a mesh size needs to be determined according to an acoustic boundary element calculation rule.

For surface vibration measurement of an ultra-high voltage (UHV) main transformer and a high-voltage reactor, measurement points are arranged based on requirements in the national standard *GB/T 16539-1996 Acoustics--Determination of Sound Power Levels of Noise Sources Using Vibration Velocity--Measurement for Seal Machinery.* At least two sensors are used during a test. One sensor needs to be used as a reference sensor, which is located in the middle of a measured point, and the other sensors are used to measure the surface vibration. Each phase is measured starting from a top position on the left from top to bottom. During the test, it is necessary to record not only a vibration acceleration amplitude of the measurement point, but also a phase relationship between each measurement point and a reference point. A test result is input into an acoustic boundary element prediction model as a calculation boundary to predict an interference sound field of a main device in the substation.

Key parameters related to sound field calculation of the substation such as a phase and spatial directivity of a coherent sound source are obtained by using an interval random model perturbation method, to perform proper interference correction on a noise distribution that is of the substation and calculated according to a downwind sound pressure level calculation method in ISO 9613-2.A specific operation process is as follows:

Firstly, near-field noise of the main device in the substation is actually measured, and sound power of each device in the substation is solved by using an equivalent sound source method. The sound power is taken as a calculation

EP 4 116 857 A1

input to solve a sound field distribution in the substation by using the downwind sound pressure level calculation method in ISO 9613-2.Groupization is performed according to the analysis method described in claim 3 and by using a genetic algorithm as an evolutionary algorithm, to minimize an objective function describing a difference between a calculated value and an observed value of an observable physical quantity, so as to obtain real model parameters of sound sources of main devices such as a transformer, a capacitor, and a cooling fan, and predict and calculate the sound field of the substation.

Secondly, a surface vibration acceleration of each main device in the substation is actually measured, and modeling is performed by using a boundary element method to solve a near-field voiceprint distribution result of each main device, and a calculation result is normalized. A sound field distribution in a sample region near each sound source is actually measured, and a calculation result of the sound field distribution in the sample region is compared with a measurement result, to determine a weighting factor of the sound field distribution.

Finally, interference correction is performed on a characteristic of the sound field distribution of the substation based on a normalized acoustic interference characteristic and the weighting factor, to complete calculation of an interference sound field distribution in the substation.

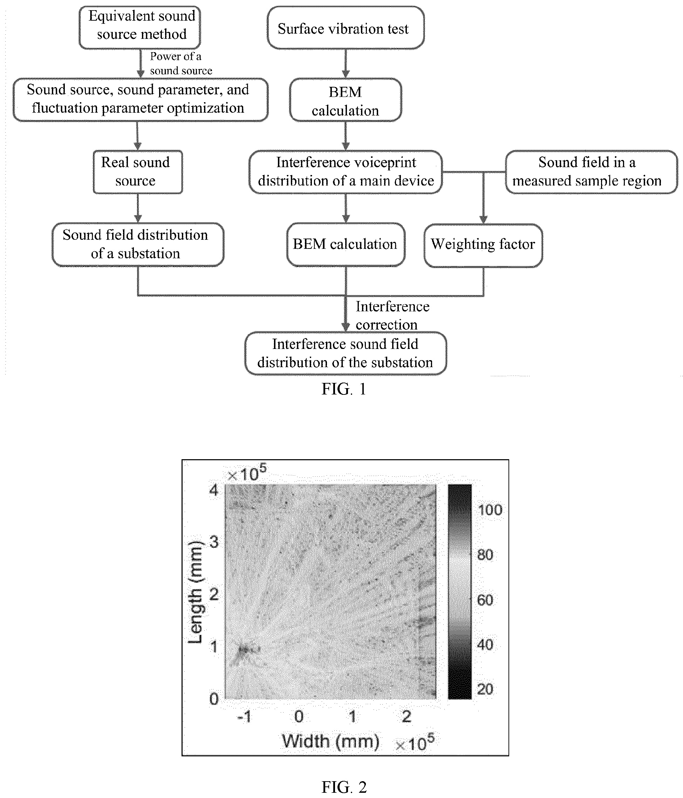

Referring to FIG. 1 to FIG. 3, a sound wave interference correction method for predicting audible noise of a substation includes the following steps:

a. Obtain sound source parameters of a main device in a substation, as well as spatial geometric dimensions of devices and buildings in the substation, and construct a 3D simulation model of the substation for sound field calculation.

b. Take, as a source intensity parameter, sound power in the sound source parameters of the main device in the substation that are obtained in step a, set a corresponding sound environment parameter and boundary condition, and perform simulation to calculate boundary noise that is of the substation and does not consider an interference factor.

c. Calculate a radiated sound field of each device in the substation based on surface vibration or near-field sound pressure of the main device in the sound source parameters of the main device in the substation that are obtained in step a.

d. Obtain a relative phase difference between individual devices and interference voiceprints of corresponding individual devices by using an interval random model perturbation method based on the radiated sound field of each device in the substation in step c.

e. Perform, by using the interference voiceprints obtained in step d, interference correction on the obtained boundary noise that is of the substation and does not consider the interference factor in step b, to obtain boundary noise of the substation.

Step a includes: obtaining surface vibration or near-field sound pressure data of devices in a safe region through actual measurement, and performing vibration parameter inversion to obtain sound source parameters of devices outside the safe region, where the vibration and sound pressure data in the safe region is surface vibration data and near-field sound pressure data that are of transformers and reactors and obtained within a safe test range below 2/3 of a height of the main device in the substation.

The performing vibration parameter inversion to obtain sound source parameters of devices outside the safe region in step a is specifically predicting, based on the surface vibration or near-field sound pressure data of the devices in the safe region, surface vibration or near-field sound pressure data that cannot be measured and is of the devices outside the safe region, which specifically includes:

calculating a modal vector $\Phi_n(x)$ of a complex surface by using a finite element method based on a device drawing or a measured structure size, to obtain a modal mobility $Y_n(\omega)$, where $n = 1,2,...,N$, and a PSD spectrum of a vibration displacement and a relative phase at a point $M$ are obtained through on-site surface vibration measurement of a device:

$$[\mathbf{W}]_{M \times 1} = [W(x_1), W(x_2), ..., W(x_M)]^T$$

where $W_i$ represents a value of a vibration displacement at a point i;
solving a modal force vector $f(x)$, where
modal force of the device in the substation is expanded as follows:

$$f(x) = \sum_{n=1}^{N} f_n \Phi_n(x)$$

$$f_n = \frac{1}{\Lambda_n} \int_0^L f(x) \Phi_n(x) dx$$

where $\Phi_n(x)$ represents a vibration modal function, and $f_n = \frac{1}{\Lambda_n} \int_0^L f(x) \Phi_n(x) dx$ represents $n^{th}$ modal force; a modal displacement is expanded as follows:

$$W(x) = \sum_{n=1}^{N} \hat{W}_n \Phi_n(x)$$

vibration displacements at top bushings and outside side safe ranges of a main transformer and a high-voltage reactor are expressed as follows:

$$\begin{bmatrix} \tilde{W}(x_1) \\ \tilde{W}(x_2) \\ . \\ . \\ \tilde{W}(x_M) \end{bmatrix} = \begin{bmatrix} \Phi_1(x_1) & \Phi_2(x_1) & . & . & \Phi_N(x_1) \\ & & & & \\ & & & & \\ \Phi_1(x_M) & & . & . & \Phi_N(x_M) \end{bmatrix} \begin{bmatrix} \hat{W}_1 \\ \hat{W}_2 \\ . \\ . \\ \hat{W}_N \end{bmatrix}$$

reconstruction precision of the modal displacement depends on a characteristic matrix and accuracy of a measured vibration displacement of a known point, and is solved by using a direct method:

$$[\hat{\mathbf{W}}]_{N \times 1} = \{ [\boldsymbol{\Phi}]_{M \times N}^{T} [\boldsymbol{\Phi}]_{M \times N} \}^{-1} [\boldsymbol{\Phi}]_{M \times N}^{T} [\mathbf{W}]_{M \times 1} ;$$

and

$$f_n = \frac{\hat{W}_n}{Y_n}$$

the modal force exciting vibration of the device is obtained through $f_n = \frac{\hat{W}_n}{Y_n}$ ; and calculating, by using a structure finite element method, a distribution of vibration that is of the main device in the substation and excited by the modal force, and using an ABAQUS program to add the modal force to a fluid-solid coupling model of the transformers and the reactors, to calculate a vibration velocity on a surface of a shell.

In step a, the vibration parameter inversion further includes parameter modeling of a capacitor and a cooling fan, where a parameter of an equivalent sound source of the capacitor is inverted by performing groupization by using a genetic algorithm as an evolutionary algorithm and measuring physical observable sound pressure data on site, so as to minimize an objective function describing a difference between a calculated value and an observed value of an observable physical quantity, which specifically includes:

regarding capacitors on each floor of a capacitor tower as a combination of $n_2$ (columns) $\times$ $n_1$ (rows) equivalent sound sources with equal source intensity and a same phase, where total sound pressure p is obtained according to the following formula:

$$p = \sum_{i=1}^{n_1 \times n_2} \frac{A}{r_i} e^{j(\omega t - \mathrm{k} r_i)}$$

where in the above formula, $A$ represents a sound pressure amplitude at 1 m away from each equivalent sound source; $r_i$ represents a distance between a sound receiving point of an $i^{th}$ point sound source and the sound source, in units of m; $\omega$ represents a fillet frequency, in units of rad/s; $t$ represents time, in units of s; and $k$ represents a quantity of sound waves, in units of m$^{-1}$;

a phase of each equivalent sound source is expressed as follows:

$$r_i = r_1 + (i_1 - 1) l_1 \sin \theta + (i_2 - 1) l_2 \cos \theta$$

where $1 \le i_1 \le n_1$, and $1 \le i_2 \le n_2$; and

total sound pressure of the equivalent sound source may be expressed as follows:

$$p = \frac{A}{r} e^{j(\omega t - \mathrm{k} r_1)} \sum_{i_2=1}^{n_2} \sum_{i_1=1}^{n_1} e^{-j2k(i_1-1)\Delta_1} e^{-j2k(i_2-1)\Delta_2}$$

where $\Delta_1 = \frac{l_1}{2} \sin \theta$, and $\Delta_2 = \frac{l_2}{2} \cos \theta$; and

when using the genetic algorithm to obtain the phase of the equivalent sound source, constructing the objective function as a difference $f(\Phi)$ between measured 2D sound radiation directivity and sound directivity calculated based on the total sound pressure, where search space ($[Q_l, Q_r]$) of the genetic algorithm is given after initial data is obtained, and $N_p$ populations are randomly generated in the space; and calculating an objective function value of each point sound source, and selecting an individual with greatest fitness as a global optimal individual.

As a noise accessory of the transformer and the reactor, the cooling fan does not operate separately. Owing to a wide-band characteristic, fan noise has a relatively small amplitude near a harmonic frequency of noise of the device. In the present disclosure, equivalent sound power is approximately a combination of point sound sources whose quantity is the same as a quantity of fans. Phase information of a sound wave of each equivalent point source at a power frequency harmonic is determined by a similar genetic algorithm.

The 3D simulation model of the substation in step a is a terrain file in a DXF format and a CAD model in an STP format, and the two models are respectively used by Soundplan software to calculate a sound field without an interference effect in step b and used by LMS Virtual lab software to calculate an interference sound field in step c; simulation software used in step b is noise simulation software based on Soundplan; a sound field of an individual device is calculated by the LMS Virtual lab software in step c, and when the sound field of the individual device is calculated, a known boundary is taken from the surface vibration or near-field sound pressure data of the main device in step a; and a digifax of the substation is taken from the CAD model in step a.

The relative phase difference between the individual devices in step d is a phase difference between different individual devices, and a phase relationship of a same individual device is determined and has been obtained in step a.

Specific implementation steps of the interval random model perturbation method in step d are as follows:

taking a load fluctuation and an equivalent position error of an equivalent sound source as interval variables based on the radiated sound field of each device in the substation;

calculating change ranges of an expectation and a standard deviation of a phase of the equivalent sound source by using the interval random model perturbation method; and taking, as a reference solution, actual phase data measured at an observation point of a radiated sound field of the main device in the substation on site, to verify and evaluate a calculation result of the interval random model perturbation method; and

adjusting, based on a reference solution of phase data of an individual sound source, a sound pressure distribution of each sound source when the sound source runs separately, to obtain the interference voiceprints of the corresponding individual devices.

Interference correction in step e is performed according to the following steps:

normalizing an interference voiceprint of each device after phase adjustment;
weighting and summing normalized interference voiceprints of the individual devices to obtain a sound pressure distribution mode considering an interference effect; and
converting the boundary noise that is of the substation and does not consider the interference factor into sound wave energy, and subtracting the sound pressure distribution data considering the interference effect from the sound wave energy to obtain a comprehensively corrected noise distribution of the substation and comprehensively corrected noise of a sensitive point at a boundary to complete correction of the boundary noise of the substation.

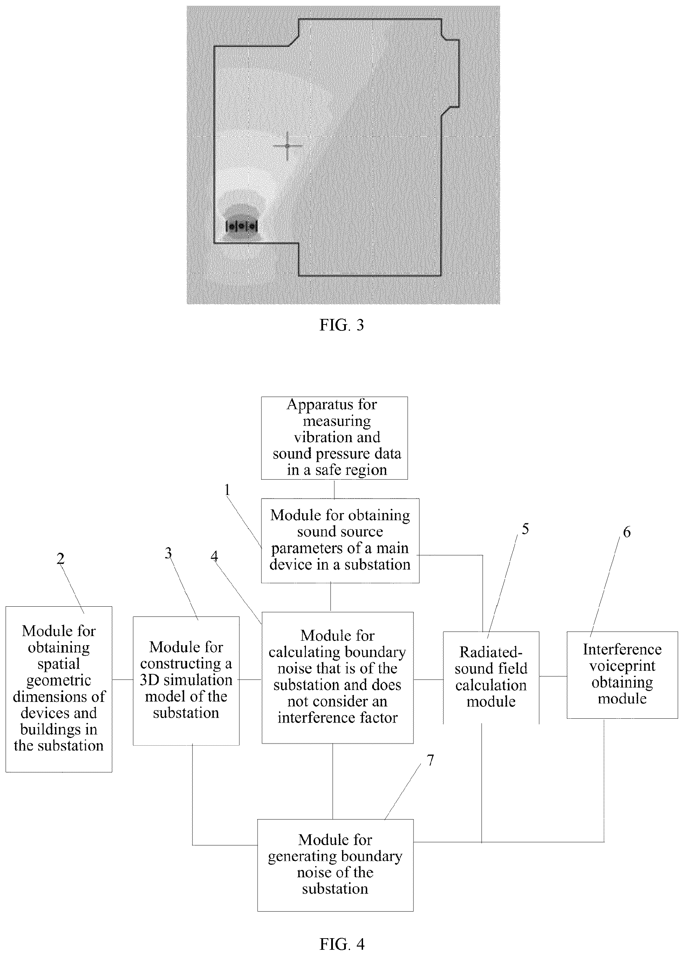

Referring to FIG. 4, a sound wave interference correction system for predicting audible noise of a substation includes a module 1 for obtaining sound source parameters of a main device in a substation, a module 2 for obtaining spatial geometric dimensions of devices and buildings in the substation, a module 3 for constructing a 3D simulation model of the substation, a module 4 for calculating boundary noise that is of the substation and does not consider an interference factor, a radiated-sound field calculation module 5, an interference voiceprint obtaining module 6, and a module 7 for generating boundary noise of the substation.

The module 1 for obtaining the sound source parameters of the main device in the substation performs vibration parameter inversion on devices of another region based on measured vibration and sound pressure data in a safe region, to obtain surface vibration or near-field sound pressure data of the devices outside the safe region.

The module 2 for obtaining the spatial geometric dimensions of the devices and the buildings in the substation is configured to obtain the spatial geometric dimensions of the devices and the buildings in the substation.

The module 3 for constructing the 3D simulation model of the substation constructs the 3D simulation model of the substation based on the spatial geometric dimensions that are of the device and the building in the substation and obtained by the module 2 for obtaining the spatial geometric dimensions of the devices and the buildings in the substation.

The module 4 for calculating the boundary noise that is of the substation and does not consider the interference factor takes, as a source intensity parameter, sound power that is of the main device in the substation and obtained by the module 1 for obtaining the sound source parameters of the main device in the substation, sets a corresponding sound environment parameter and boundary condition, and performs simulation to calculate the boundary noise that is of the substation and does not consider the interference factor.

The radiated-sound field calculation module 5 is configured to separately calculate a radiated sound field of each device in the substation by using, as a known condition, surface vibration or near-field sound pressure that is of the main device and obtained by the module 1 for obtaining the sound source parameters of the main device in the substation.

The interference voiceprint obtaining module 6 obtains a relative phase difference between individual devices and interference voiceprints of corresponding individual devices by using an interval random model perturbation method.

The module 7 for generating the boundary noise of the substation performs, by using the interference voiceprints obtained by the interference voiceprint obtaining module 6, interference correction on a noise distribution that is of the substation and obtained according to a downwind sound pressure level calculation method in ISO 9613-2 by the module 4 for calculating the boundary noise that is of the substation and does not consider the interference factor, so as to obtain the final boundary noise of the substation.

The sound wave interference correction system further includes an apparatus for measuring the vibration and sound pressure data in the safe region.

Those skilled in the art should understand that the embodiments of the present disclosure may be provided as a method, a system, or a computer program product. Therefore, the present disclosure may use a form of hardware only embodiments, software only embodiments, or embodiments with a combination of software and hardware. Moreover, the present disclosure may be in a form of a computer program product that is implemented on one or more computer-usable storage media (including but not limited to a magnetic disk memory, a CD-ROM, an optical memory, and the like) that include computer-usable program code.

The present disclosure is described with reference to the flowcharts and/or block diagrams of the method, the device (system), and the computer program product according to the embodiments of the present disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, such that the instructions executed by a computer or a processor of another programmable data processing device generate an apparatus for implementing a specific function in one or more processes in the flowcharts and/or in one or more blocks in the block diagrams.

These computer program instructions may be stored in a computer-readable memory that can instruct the computer or another programmable data processing device to work in a specific manner, such that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, such that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Finally, it should be noted that: the above embodiments are merely intended to describe the technical solutions of the present disclosure, rather than to limit thereto; although the present disclosure is described in detail with reference to the above embodiments, it is to be appreciated by a person of ordinary skill in the art that modifications or equivalent substitutions may still be made to the specific implementations of the present disclosure, and any modifications or equivalent substitutions made without departing from the spirit and scope of the present disclosure shall fall within the protection scope of the claims of the present disclosure.

## Claims

1. A sound wave interference correction method for predicting audible noise of a substation, comprising the following steps:

   a. obtaining sound source parameters of a main device in a substation, as well as spatial geometric dimensions of devices and buildings in the substation, and constructing a three-dimensional (3D) simulation model of the substation for sound field calculation;
   b. taking, as a source intensity parameter, sound power in the sound source parameters of the main device in the substation that are obtained in step a, setting a corresponding sound environment parameter and boundary condition, and performing simulation to calculate boundary noise that is of the substation and does not consider an interference factor.
   c. calculating a radiated sound field of each device in the substation based on surface vibration or near-field sound pressure of the main device in the sound source parameters of the main device in the substation that are obtained in step a;
   d. obtaining a relative phase difference between individual devices and interference voiceprints of corresponding individual devices by using an interval random model perturbation method based on the radiated sound field of each device in the substation in step c; and
   e. performing, by using the interference voiceprint obtained in step d, interference correction on the obtained boundary noise that is of the substation and does not consider the interference factor in step b, to obtain boundary noise of the substation.

2. The sound wave interference correction method for predicting audible noise of a substation according to claim 1, wherein step a comprises: obtaining surface vibration or near-field sound pressure data of devices in a safe region through actual measurement, and performing vibration parameter inversion to obtain sound source parameters of devices outside the safe region, wherein the vibration and sound pressure data in the safe region is surface vibration data and near-field sound pressure data that are of transformers and reactors and obtained within a safe test range below 2/3 of a height of the main device in the substation.

3. The sound wave interference correction method for predicting audible noise of a substation according to claim 2, wherein the performing vibration parameter inversion to obtain sound source parameters of devices outside the safe region in step a is specifically predicting, based on the surface vibration or near-field sound pressure data of the devices in the safe region, surface vibration or near-field sound pressure data that cannot be measured and is of the devices outside the safe region, which specifically comprises:

   calculating a modal vector $\Phi_n(x)$ of a complex surface by using a finite element method based on a device drawing or a measured structure size, to obtain a modal mobility $Y_n(\omega)$, wherein $n = 1,2,...,N$, and a power spectral density (PSD) spectrum of a vibration displacement and a relative phase at a point $M$ are obtained through on-site surface vibration measurement of a device:

$$[\mathbf{W}]_{M \times 1} = [W(x_1), W(x_2), ..., W(x_M)]^T$$

wherein $W_i$ represents a value of a vibration displacement at a point i;
solving a modal force vector $f(x)$, wherein
modal force of the device in the substation is expanded as follows:

$$f(x) = \sum_{n=1}^{N} f_n \Phi_n(x)$$

$$f_n = \frac{1}{\Lambda_n} \int_0^L f(x) \Phi_n(x) dx$$

wherein $\Phi_n(x)$ represents a vibration modal function, and $f_n = \frac{1}{\Lambda_n} \int_0^L f(x) \Phi_n(x) dx$ represents $n^{th}$ modal force;
a modal displacement is expanded as follows:

$$W(x) = \sum_{n=1}^{N} \hat{W}_n \Phi_n(x)$$

vibration displacements at top bushings and outside side safe ranges of a main transformer and a high-voltage reactor are expressed as follows:

$$\begin{bmatrix} \tilde{W}(x_1) \\ \tilde{W}(x_2) \\ . \\ . \\ \tilde{W}(x_M) \end{bmatrix} = \begin{bmatrix} \Phi_1(x_1) & \Phi_2(x_1) & . & . & \Phi_N(x_1) \\ & & & & \\ & & & & \\ \Phi_1(x_M) & . & . & . & \Phi_N(x_M) \end{bmatrix} \begin{bmatrix} \hat{W}_1 \\ \hat{W}_2 \\ . \\ . \\ \hat{W}_N \end{bmatrix}$$

reconstruction precision of the modal displacement depends on a characteristic matrix and accuracy of a measured vibration displacement of a known point, and is solved by using a direct method:

$$[\hat{\mathbf{W}}]_{N \times 1} = \{[\Phi]_{M \times N}^T [\Phi]_{M \times N}\}^{-1} [\Phi]_{M \times N}^T [\mathbf{W}]_{M \times 1} \, ,$$

and

$$f_n = \frac{\hat{W}_n}{Y_n}$$

the modal force exciting vibration of the device is obtained through $f_n = \frac{\hat{W}_n}{Y_n}$ ; and
calculating, by using a structure finite element method, a distribution of vibration that is of the main device in the substation and excited by the modal force, and using an ABAQUS program to add the modal force to a fluid-solid coupling model of the transformers and the reactors, to calculate a vibration velocity on a surface of a shell.

4. The sound wave interference correction method for predicting audible noise of a substation according to claim 3, wherein the performing vibration parameter inversion to obtain sound source parameters of devices outside the safe region in step a further comprises obtaining a parameter of an equivalent sound source of a capacitor, wherein the parameter of the equivalent sound source of the capacitor is inverted by performing groupization by using a genetic algorithm as an evolutionary algorithm and measuring physical observable sound pressure data on site, so as to minimize an objective function describing a difference between a calculated value and an observed value of an observable physical quantity, which specifically comprises:

regarding capacitors on each floor of a capacitor tower as a combination of $n_2$ (columns) $\times$ $n_1$ (rows) equivalent

sound sources with equal source intensity and a same phase, wherein total sound pressure p is obtained according to the following formula:

$$p = \sum_{i=1}^{n_1 \times n_2} \frac{A}{r_i} e^{j(\omega t - kr_i)}$$

wherein in the above formula, $A$ represents a sound pressure amplitude at 1 m away from each equivalent sound source; $r_i$ represents a distance between a sound receiving point of an $i^{th}$ point sound source and the sound source, in units of m; $\omega$ represents a fillet frequency, in units of rad/s; $t$ represents time, in units of s; and $k$ represents a quantity of sound waves, in units of m$^{-1}$;
a phase of each equivalent sound source is expressed as follows:

$$r_i = r_1 + (i_1 - 1)l_1 \sin\theta + (i_2 - 1)l_2 \cos\theta$$

wherein $1 \leq i_1 \leq n_1$, and $1 \leq i_2 \leq n_2$; and
total sound pressure of the equivalent sound source is expressed as follows:

$$p = \frac{A}{r} e^{j(\omega t - kr_1)} \sum_{i_2=1}^{n_2} \sum_{i_1=1}^{n_1} e^{-j2k(i_1-1)\Delta_1} e^{-j2k(i_2-1)\Delta_2}$$

wherein $\Delta_1 = \frac{l_1}{2}\sin\theta$, and $\Delta_2 = \frac{l_2}{2}\cos\theta$; and
when using the genetic algorithm to obtain the phase of the equivalent sound source, constructing the objective function as a difference $f(\Phi)$ between measured 2D sound radiation directivity and sound directivity calculated based on the total sound pressure, wherein search space ($[Q_l, Q_r]$) of the genetic algorithm is given after initial data is obtained, and $N_p$ populations are randomly generated in the space; and calculating an objective function value of each point sound source, and selecting an individual with greatest fitness as a global optimal individual, namely, the parameter of the equivalent sound source of the capacitor.

5. The sound wave interference correction method for predicting audible noise of a substation according to claim 1, wherein the 3D simulation model of the substation in step a is a terrain file in a DXF format and a CAD model in an STP format, and the two models are respectively used by Soundplan software to calculate a sound field without an interference effect in step b and used by LMS Virtual lab software to calculate an interference sound field in step c; simulation software used in step b is noise simulation software based on Soundplan; a sound field of an individual device is calculated by the LMS Virtual lab software in step c, and when the sound field of the individual device is calculated, a known boundary is taken from the surface vibration or near-field sound pressure data of the main device in step a; and a digifax of the substation is taken from the CAD model in step a.

6. The sound wave interference correction method for predicting audible noise of a substation according to claim 1, wherein the relative phase difference between the individual devices in step d is a phase difference between different individual devices, and a phase relationship of a same individual device is determined and has been obtained in step a.

7. The sound wave interference correction method for predicting audible noise of a substation according to claim 1, wherein specific implementation steps of the interval random model perturbation method in step d are as follows:

taking a load fluctuation and an equivalent position error of an equivalent sound source as interval variables based on the radiated sound field of each device in the substation;
calculating change ranges of an expectation and a standard deviation of a phase of the equivalent sound source by using the interval random model perturbation method; and taking, as a reference solution, actual phase data measured at an observation point of a radiated sound field of the main device in the substation on site, to verify and evaluate a calculation result of the interval random model perturbation method; and
adjusting, based on a reference solution of phase data of an individual sound source, a sound pressure distribution of each sound source when the sound source runs separately, to obtain the interference voiceprints of the corresponding individual devices.

8. The sound wave interference correction method for predicting audible noise of a substation according to claim 7, wherein interference correction in step e is performed according to the following steps:

   normalizing an interference voiceprint of each device after phase adjustment;
   weighting and summing normalized interference voiceprints of the individual devices to obtain a sound pressure distribution mode considering an interference effect; and
   converting the boundary noise that is of the substation and does not consider the interference factor into sound wave energy, and subtracting the sound pressure distribution mode considering the interference effect from the sound wave energy to obtain a comprehensively corrected noise distribution of the substation and comprehensively corrected noise of a sensitive point at a boundary to complete correction of the boundary noise of the substation.

9. A sound wave interference correction system for predicting audible noise of a substation, comprising a module (1) for obtaining sound source parameters of a main device in a substation, a module (2) for obtaining spatial geometric dimensions of devices and buildings in the substation, a module (3) for constructing a 3D simulation model of the substation, a module (4) for calculating boundary noise that is of the substation and does not consider an interference factor, a radiated-sound field calculation module (5), an interference voiceprint obtaining module (6), and a module (7) for generating boundary noise of the substation, wherein

   the module (1) for obtaining the sound source parameters of the main device in the substation performs vibration parameter inversion on devices of another region based on measured vibration and sound pressure data in a safe region, to obtain surface vibration or near-field sound pressure data of the devices outside the safe region;
   the module (2) for obtaining the spatial geometric dimensions of the devices and the buildings in the substation is configured to obtain the spatial geometric dimensions of the devices and the buildings in the substation;
   the module (3) for constructing the 3D simulation model of the substation constructs the 3D simulation model of the substation based on the spatial geometric dimensions that are of the device and the building in the substation and obtained by the module (2) for obtaining the spatial geometric dimensions of the devices and the buildings in the substation;
   the module (4) for calculating the boundary noise that is of the substation and does not consider the interference factor takes, as a source intensity parameter, sound power that is of the main device in the substation and obtained by the module (1) for obtaining the sound source parameters of the main device in the substation, sets a corresponding sound environment parameter and boundary condition, and performs simulation to calculate the boundary noise that is of the substation and does not consider the interference factor;
   the radiated-sound field calculation module (5) is configured to separately calculate a radiated sound field of each device in the substation by using, as a known condition, surface vibration or near-field sound pressure data that is of the main device and obtained by the module (1) for obtaining the sound source parameters of the main device in the substation;
   the interference voiceprint obtaining module (6) obtains a relative phase difference between individual devices and interference voiceprints of corresponding individual devices by using an interval random model perturbation method; and
   the module (7) for generating the boundary noise of the substation performs, by using the interference voiceprints obtained by the interference voiceprint obtaining module (6), interference correction on a noise distribution that is of the substation and obtained according to a downwind sound pressure level calculation method in ISO 9613-2 by the module (4) for calculating the boundary noise that is of the substation and does not consider the interference factor, so as to obtain the final boundary noise of the substation.

10. The sound wave interference correction system for predicting audible noise of a substation according to claim 9, wherein the sound wave interference correction system further comprises an apparatus for measuring the vibration and sound pressure data in the safe region.

```
┌─────────────────────┐          ┌─────────────────────┐
│  Equivalent sound   │          │ Surface vibration test │
│   source method     │          └──────────┬──────────┘
└──────────┬──────────┘                     │
     Power of a                             ▼
     sound source              ┌─────────────────────┐
           ▼                   │        BEM          │
┌─────────────────────────────┐│    calculation      │
│ Sound source, sound parameter, and ││                 │
│ fluctuation parameter optimization │└──────────┬──────────┘
└──────────────┬──────────────┘            │
               │                           │
               ▼                           ▼
     ┌─────────────────┐   ┌──────────────────────────┐   ┌─────────────────────────┐
     │   Real sound    │   │  Interference voiceprint  │   │     Sound field in a    │
     │     source      │   │ distribution of a main device │   │  measured sample region │
     └────────┬────────┘   └───────────┬──────────────┘   └────────────┬────────────┘
              │                        │                               │
              ▼                        ▼                               ▼
┌───────────────────────┐   ┌─────────────────┐   ┌──────────────────────┐
│ Sound field distribution │   │  BEM calculation  │   │   Weighting factor   │
│    of a substation     │   └────────┬────────┘   └──────────┬───────────┘
└───────────┬───────────┘            │                        │
            │              Interference                       │
            │              correction                         │
            │                   ▼                             │
     ┌──────────────────────────────────┐
     │   Interference sound field        │
     │ distribution of the substation    │
     └──────────────────────────────────┘
```

FIG. 1

FIG. 2

FIG. 3

FIG. 4

## INTERNATIONAL SEARCH REPORT

International application No.

**PCT/CN2022/091600**

| A. | CLASSIFICATION OF SUBJECT MATTER |
|---|---|

G06F 30/23(2020.01)i;   G06F 119/10(2020.01)n

According to International Patent Classification (IPC) or to both national classification and IPC

| B. | FIELDS SEARCHED |
|---|---|

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE; 百度, BAIDU; 读秀, DUXIU: 变电站, 厂界噪声, 背景噪声, 干涉, 声纹, 修正, 辐射, 声场, 相位差, transformer substation, boundary noise, background noise, interference, voiceprint, correct+, radiation, sound field, phase difference

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 113221413 A (STATE GRID HUBEI ELECTRIC POWER CO., LTD., ELECTRIC POWER RESEARCH INSTITUTE et al.) 06 August 2021 (2021-08-06) claims 1-10, and description, paragraphs [0066]-[0128], and figures 1-4 | 1-10 |
| A | 宋凯 (SONG, Kai). "特高压变电站噪声特性、预测及调控技术研究 (Study on Characteristics, Prediction and Control Technique of UHV Transformer Substation Noise)" 中国优秀硕士学位论文全文数据库(电子期刊)工程科技II辑 (Engineering Science and Technology II, China Master's Theses Full-Text Database (Electronic Journals)), No. 06, 15 June 2017 (2017-06-15), ISSN: 1674-0246, text, pp. 28-44 | 1-10 |
| A | CN 110243464 A (STATE GRID CORPORATION OF CHINA et al.) 17 September 2019 (2019-09-17) entire document | 1-10 |
| A | CN 112347705 A (CHINA ELECTRIC POWER RESEARCH INSTITUTE CO., LTD.) 09 February 2021 (2021-02-09) entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 July 2022** | **19 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/091600**

### C.     DOCUMENTS CONSIDERED TO BE RELEVANT

| Category* | Citation of document, with indication, where appropriate, of the relevant passages | Relevant to claim No. |
|---|---|---|
| A | CN 107860469 A (CHONGQING UNIVERSITY et al.) 30 March 2018 (2018-03-30)<br>entire document | 1-10 |
| A | 杜杰伟 等 (DU, Jiewei et al.). "特高压变电站厂界环境噪声测量与评估探讨 (Measurement and Evaluation of Ambient Noise in UHV Substations)"<br>噪声与振动控制 (Noise and Vibration Control),<br>Vol. 38, No. 6, 31 December 2018 (2018-12-31),<br>ISSN: 1006-1355,<br>pp. 118-123 | 1-10 |

Form PCT/ISA/210 (second sheet) (January 2015)

## INTERNATIONAL SEARCH REPORT
### Information on patent family members

| International application No. |
| --- |
| **PCT/CN2022/091600** |

| Patent document cited in search report | | | Publication date (day/month/year) | Patent family member(s) | | | Publication date (day/month/year) |
| --- | --- | --- | --- | --- | --- | --- | --- |
| CN | 113221413 | A | 06 August 2021 | None | | | |
| CN | 110243464 | A | 17 September 2019 | None | | | |
| CN | 112347705 | A | 09 February 2021 | CN | 112347705 | B | 02 April 2021 |
| CN | 107860469 | A | 30 March 2018 | CN | 107860469 | B | 10 September 2019 |

Form PCT/ISA/210 (patent family annex) (January 2015)